# EUROPEAN PATENT SPECIFICATION

(11) **EP 3 944 592 B1**
(45) Date of publication and mention of the grant of the patent: **28.02.2024**
(21) Application number: 20911296.0
(22) Date of filing: 10.11.2020
(51) Int. Cl.: H04L 67/60, H04L 67/51, G06F 16/738, G06F 16/75, G06F 16/783, G06N 3/08

(54) **VOICE PACKET RECOMMENDATION**
EMPFEHLUNG EINES SPRACHPAKETS
RECOMMANDATION DE PAQUET VOCAL

(30) Priority: 27.05.2020 CN 202010463398
(43) Date of publication of application: 26.01.2022
(73) Proprietor: Baidu Online Network Technology (Beijing) Co., Ltd, Beijing 100085 (CN)
(72) Inventor: DING, Shiqiang, Beijing 100085 (CN); WU, Di, Beijing 100085 (CN); HUANG, Jizhou, Beijing 100085 (CN)
(74) Representative: Regimbeau
(86) International application number: PCT/CN2020/127704
(87) International publication number: WO 2021/238084

(56) References cited:
- CN-A- 103 674 012
- CN-A- 110 674 241
- CN-A- 110 704 682
- CN-A- 110 795 593
- US-B2- 10 313 713
- US-B2- 10 325 592

## Description

### TECHNICAL FIELD

The present application relates to the field of data processing technologies, for example, intelligent search technologies.

### BACKGROUND

Currently, an electronic map can provide multiple voice packets from which a user can select and use a voice packet as desired. Generally, the user selects a voice packet as desired by trying out voice packets one by one. Such an operation is cumbersome and inefficient. Further relevant technologies are also known from document US 10313713B2, which relates to methods, systems, and media for identifying and presenting users with multi-lingual media content items.

### SUMMARY

The following is a summary of the subject matter described herein in detail. This summary is not intended to limit the scope of the claims.

The present application provides a voice packet recommendation method, a device and a storage medium that are convenient and more efficient to operate according to independent claims. Further improvements and embodiments are provided in the dependent claims.

In embodiments of the present application, the solution includes, in addition to further features according to the independent claims, selecting at least one target display video for a user from among candidate display videos associated with voice packets and using voice packets to which the at least one target display video belongs as candidate voice packets; selecting a target voice packet for the user from among the candidate voice packets according to attribute information of the candidate voice packets and attribute information of the at least one target display video; and recommending the target voice packet to the user. With the solution, a user can acquire a voice packet more conveniently and efficiently.

It is to be understood that the content described in this part is neither intended to identify key or important features of embodiments of the present disclosure nor intended to limit the scope of the present disclosure. Other features of the present disclosure are apparent from the description provided hereinafter.

Other aspects can be understood after the drawings and the detailed description are read and understood.

### BRIEF DESCRIPTION OF DRAWINGS

The drawings are intended to provide a better understanding of the present solution and not to limit the present application.
FIG. 1 is a flowchart of a voice packet recommendation method according to embodiments of the present application.
FIG. 2 is a flowchart of another voice packet recommendation method according to embodiments of the present application.
FIG. 3 is a flowchart of another voice packet recommendation method according to embodiments of the present application.
FIG. 4 is a flowchart of another voice packet recommendation method according to embodiments of the present application.
FIG. 5A is a flowchart of another voice packet recommendation method according to embodiments of the present application.
FIG. 5B is a diagram illustrating the structure of a first neural network model according to embodiments of the present application.
FIG. 5C is a diagram illustrating the structure of a second neural network model according to embodiments of the present application.
FIG. 5D is a diagram illustrating a process of determining a portrait tag of a user according to embodiments of the present application.
FIG. 6 is a diagram illustrating the structure of a voice packet recommendation apparatus according to embodiments of the present application.
FIG. 7 is a block diagram of an electronic device for performing a voice packet recommendation method according to embodiments of the present application.

### DETAILED DESCRIPTION

Example embodiments of the present application, including details of embodiments of the present application, are described hereinafter in connection with the drawings to facilitate understanding. The example embodiments are illustrative only. Therefore, it will be appreciated by those having ordinary skill in the art that changes and modifications may be made to the embodiments described herein without departing from the scope of the present application which is defined by the appended claims. Similarly, description of well-known functions and constructions is omitted hereinafter for clarity and conciseness.

The voice packet recommendation method and the voice packet recommendation apparatus provided in embodiments of the present application are applicable to a case where a voice packet is acquired by using an application including the voice broadcasting function. The voice packet recommendation method is performed by the voice packet recommendation apparatus. The apparatus is implemented as software, hardware or a combination thereof and disposed in an electronic device.

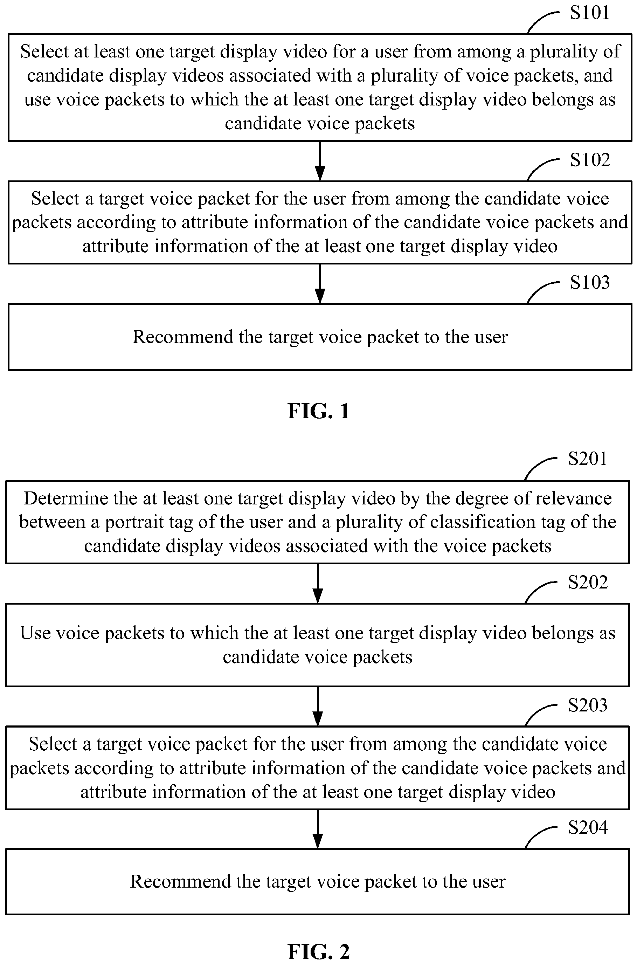

FIG. 1 is a flowchart of a voice packet recommendation method according to embodiments of the present application. The method includes the steps below.

In S 101, at least one target display video is selected for a user from among a plurality of candidate display videos associated with a plurality of voice packets, and voice packets to which the at least one target display video belongs are used as candidate voice packets.

A candidate display video associated with a voice packet includes at least one of the image, voice or caption of a voice provider. The at least one of the image, voice or caption is configured to represent the image feature and voice feature of the voice provider of the voice packet. The image feature includes at least one of a loli image, a royal elder sister image, an uncle image or an intellectual property (IP) image. The voice feature includes at least one of a voice quality or a voice style. The voice quality includes at least one of male, female, sweet or husky. The voice style includes at least one of a broadcasting tone or a humorous style.

Each voice packet is associated with at least one candidate display video. In one embodiment, an association between voice packets and candidate display videos may be prestored locally in an electronic device, in other storage devices associated with the electronic device or in the cloud. Accordingly, the candidate display videos associated with the voice packets are searched for the target display video according to this association when necessary. In one embodiment, the target display video may be prestored locally in an electronic device, in other storage devices associated with the electronic device or in the cloud, and the target display video is acquired when found. For example, it is feasible to search for the video identifier of the target display video and acquire the target display video according to the video identifier.

In an optional implementation of embodiments of the present application, it is feasible to select a target display video for a user from among the candidate display videos associated with the voice packets according to the display videos acquired when a similar user of the user acquires a voice packet.

In another optional implementation of embodiments of the present application, to reduce the amount of data calculation for selection of the target display video and improve the efficiency of selecting the target display video, it is feasible to select a target display video for a user from among candidate display videos associated with voice packets according to the similarity between each of the candidate display videos and historical display videos acquired when the user acquires a voice packet.

In another optional implementation of embodiments of the present application, in order for a large data volume to affect instant results, it is feasible to train a machine learning model based on a sample user and the historical behavior data of the sample user and select, by using the trained machine learning model, a target display video for a user from among candidate display videos associated with voice packets.

Accordingly, after selecting the at least one target display video for the user from among the candidate display videos associated with the voice packets, it is feasible to use voice packets to which the at least one target display video belongs as candidate voice packets. It is to be noted that the number of voice packets is at least one, and the number of candidate display videos associated with each voice packet is also at least one, so the number of candidate voice packets finally determined is also at least one. Subsequently, it is feasible to select the target voice packet from among the at least one candidate voice packets.

In S 102, a target voice packet is selected for the user from among the candidate voice packets according to attribute information of the candidate voice packets and attribute information of the at least one target display video.

The attribute information of the candidate voice packets includes at least one of user interaction data or voice packet description data. The user interaction data is configured to represent interaction between the current user or other users and the candidate voice packets. The interaction includes at least one of clicking, downloading, browsing, commenting or sharing. The voice packet description data is configured to represent basic attributes of a voice packet, for example, at least one of a voice feature, a broadcasting feature, or the image feature of the provider of the voice packet.

The attribute information of the at least one target display video includes video description data and voice packet association data. The video description data is configured to represent the attributes of a video, for example, at least one of a video type or a video source. The voice packet association data is configured to represent an association between a video and a voice packet, for example, the similarity between a video and a voice packet.

In an optional implementation of embodiments of the present application, it is feasible to select, based on a sorting model, a target voice packet for the user from among the candidate voice packets according to attribute information of the candidate voice packets and attribute information of the at least one target display video. The sorting model may be an attribute model or a neural network model. The sorting model may be implemented in at least one of the following manners: pointwise, pairwise or listwise.

Exemplarily, when the sorting model is trained, training data may be automatically constructed based on the user's operation behavior. In the listwise manner, for example, the large number of videos browsed by a same user may be sorted by behavior of interaction between the user and the videos and the degree of interaction between the user and the videos. For example, different videos are sorted from high to low by "a video converted from download behavior, a clicked video, a commented video, an all browsed video, a partially browsed video and a barely browsed video". Of course, it is also feasible for a skilled technician to add or modify the order of videos in the sorting according to needs or experience. This is not limited in embodiments of the present application.

It is to be noted that the number of the target voice packet selected for the user from among the candidate voice packets is at least one. When at least two target voice packets are selected, the selected target voice packets may be sorted, for example, by using the preceding sorting model, or the order of the target voice packets may be determined randomly.

In S103, the target voice packet is recommended to the user.

A target voice packet is recommended to the user so that a voice broadcasting service is provided for the user based on the target voice packet. When at least two target voice packets are selected, it is feasible to recommend the target voice packets sequentially to the user and then determine, based on the user selection, a target voice packet providing a voice broadcasting service.

In embodiments of the present application, the solution includes selecting at least one target display video for a user from among candidate display videos associated with voice packets and using voice packets to which the at least one target display video belongs as candidate voice packets; selecting a target voice packet for the user from among the candidate voice packets according to attribute information of the candidate voice packets and attribute information of the at least one target display video; and recommending the target voice packet to the user. With this solution, a voice packet is determined by using a video associated with the voice packet as an intermediate medium, and a target voice packet is recommended automatically, so that a transition is achieved from the case where a user searches for a voice packet to the case where a voice packet searches for a user. Moreover, a voice packet is determined by using a video, so a user does not need to try out voice packets frequently so that a user can acquire a voice packet more conveniently and efficiently.

FIG. 2 is a flowchart of another voice packet recommendation method according to embodiments of the present application. The technical solution corresponding to the method is an improvement on each preceding technical solution.

In one embodiment, the step "at least one target display video is selected for a user from among candidate display videos associated with voice packets" includes that the at least one target display video is determined by the degree of relevance between a portrait tag of the user and classification tags of the candidate display videos associated with the voice packets so that the determination mechanism of the target display video is optimized.

As shown in FIG. 2, the voice packet recommendation method includes the steps below.

In S201, the at least one target display video is determined by the degree of relevance between a portrait tag of the user and a plurality of classification tags of the candidate display videos associated with the voice packets.

The portrait tag of the user are configured to represent the attributes of the user. The attributes of the user may include, for example, at least one of sweet, intimate, funny or royal elder sister.

In one embodiment, the classification tag of a candidate display video may include an image tag configured to represent the image feature of a voice provider (that is, an image in a video), for example, at least one of a loli image, a royal elder sister image, an uncle image or an IP image. Alternatively, in one embodiment, the classification tag of a candidate display video may include a voice quality tag configured to represent the voice feature of a voice provider in a video, for example, at least one of male, female, sweet or husky. Alternatively, in one embodiment, the classification tag of a candidate display video may include a voice style tag configured to represent a voice broadcasting style in a video, for example, at least one of a broadcasting tone or a humorous style.

Exemplarily, the portrait tag of a user may be determined by historical behavior data of the user. The historical behavior data includes data involved in behavior of interaction between the user and historical videos. The behavior of interaction includes at least one of clicking, downloading, browsing, commenting or sharing.

In one embodiment, the portrait tag of a user may be determined by historical behavior data of the user in the following manner: The classification tag of a video is determined based on historical videos in historical behavior data of the user by collaborative filtering; weighted sorting is performed according to the frequency of occurrence and types of behavior of interaction in the historical behavior data so that the portrait tag of the user is obtained.

In an optional implementation of embodiments of the present application, the classification tag of a candidate display video may be added in a manner of manual tagging.

In another optional implementation of embodiments of the present application, to improve the efficiency of determining the classification tag of a candidate display video to reduce the labor cost, it is feasible to determine the classification tag of the candidate display video in the following manner: Pictures are extracted from the candidate display video; and the extracted pictures are input into a pretrained multi-classification model, and the at least one classification tag of the candidate display video is determined by the model output result. The multi-classification model may be a neural network model.

The classification tag of a video has different dimensions, for example, an image tag, a voice quality tag or a voice style tag. The classification tag of a different dimension generally corresponds to a different tag value. Thus, different videos may correspond to different tag values. Therefore, determination of classification tags of candidate display videos is equivalent to multiple-classification tasks.

In the present application, to achieve batch processing of the multiple-classification tasks, the following operations are performed: At least one picture is extracted from a candidate display video to serve as the basis of determination of a classification tag, and each of the extracted pictures is input into a pretrained multi-classification model so that a probability value of each of tag values corresponding to a different dimension is obtained; at least one classification tag of the candidate display video is determined by the probability value of each of the tag values. In one embodiment, each tag value whose number is a set quantity threshold, or whose probability value is greater than a set probability threshold, or whose number is a set quantity threshold and set probability value are greater than a set probability threshold is used as the classification tag of a candidate display video. The set quantity threshold and the set probability threshold are set by a skilled person according to needs or empirical values or are determined by a skilled person based on a large number of repeated experiments.

Exemplarily, the multi-classification model includes a feature extraction layer and an output layer. The feature extraction layer is configured for feature extraction of an input picture. The output layer is configured for determination of a classification tag based on the extracted features.

In an optional implementation of embodiments of the present application, to improve the efficiency of determining classification tags, the multi-classification model shares model parameters in a process of determination of each of the classification tags. Exemplarily, when the classification tags include at least two types, the multi-classification model may be provided with a classifier for each type of classification tags to determine each type of tag values so that network parameters of the feature extraction layer are shared. In this manner, the extracted features can promote each other to facilitate extraction of common features when different classification tags are being determined. Thus, the relevance and accuracy of the determination results of the classification tags are improved to some extent.

In the training phase of the multi-classification model, it is feasible to train a preconstructed neural network model according to a sample picture extracted from a sample video and a sample classification tag to obtain the multi-classification model. The sample classification tag may be added in a manner of manual tagging.

In the preparation phase of a training sample of the multi-classification model, it is time-consuming and labor-intensive to determine a sample video in a manner of manual tagging. In another optional implementation of embodiments of the present application, to reduce the labor cost and time cost invested in the preparation phase of a training sample, improve the preparation efficiency of the training sample, solve the cold-start problem, and expand the training sample data amount, it is feasible, in the training phase of the multi-classification model, to generate the sample classification tag of a sample video by replacing a manner of manual tagging with a manner of migration of associated data in the sample video. Exemplarily, it is feasible to use a text description of a sample video, or the user portrait of a viewing user of the sample video, or the text description of the sample video and the user portrait of the viewing user of the sample video as a sample classification tag of the sample video; and train a preconstructed neural network model according to a sample picture extracted from the sample video and the sample classification tag to obtain the multi-classification model.

Exemplarily, the degree of relevance between a portrait tag of a user and a plurality of classification tags of candidate display videos associated with voice packets are determined; the candidate display videos are sorted according to the values of the degree of relevance; and at least one candidate display video is determined to be at least one target display video according to sorting result.

In one embodiment, a portrait tag of a user, or the classification tag of a candidate display video, or the portrait tag of the user and the classification tag of the candidate display video may be prestored locally in an electronic device or in other storage devices associated with the electronic device and may be acquired as desired. Alternatively, in one embodiment, a portrait tag of a user, or the classification tag of a candidate display video, or the portrait tag of the user and the classification tag of the candidate display video may be determined in real time in at least one of the preceding manners in the process of determination of a target display video. Accordingly, a degree of relevance is determined based on the acquired or determined portrait tag of the user and classification tag of the candidate display video associated with a voice packet, and then the target display video is selected based on this degree of relevance.

In S202, voice packets to which the at least one target display video belong are used as candidate voice packets.

In S203, a target voice packet is selected for the user from among the candidate voice packets according to attribute information of the candidate voice packets and attribute information of the at least one target display video.

In S204, the target voice packet is recommended to the user.

In embodiments of the present application, the step at least one target display video is selected for a user from among candidate display videos associated with voice packets includes that the at least one target display video is determined by the degree of relevance between a portrait tag of the user and a plurality of classification tags of the candidate display videos associated with the voice packets. With the preceding solution, a target display video is selected by using the portrait tag of a user and the classification tag of a candidate display video as reference factors. In this manner, a target display video better matching the interest of the user is selected, laying a foundation for the degree of matching between a subsequently selected target voice packet and the user.

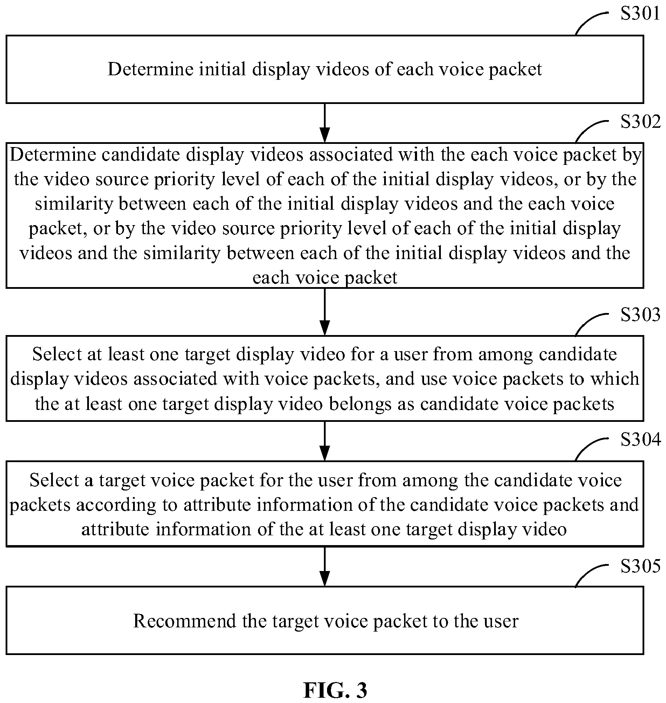

FIG. 3 is a flowchart of another voice packet recommendation method according to embodiments of the present application. The solution corresponding to the method is an improvement on each preceding solution.

In one embodiment, when the voice packet recommendation method is performed, the step "initial display videos of each voice packet are determined; and candidate display videos associated with the each voice packet are determined by the video source priority level of each of the initial display videos" is added so that the construction mechanism of an association between voice packets and candidate display videos is optimized.

In one embodiment, when the voice packet recommendation method is performed, the step "initial display videos of each voice packet are determined; and candidate display videos associated with the each voice packet are determined by the similarity between each of the initial display videos and the each voice packet" is added so that the construction mechanism of an association between voice packets and candidate display videos is optimized.

As shown in FIG. 3, the voice packet recommendation method includes the steps below.

In S301, initial display videos of each voice packet are determined.

In an optional implementation of embodiments of the present application, initial display videos of a voice packet may be generated in a manner in which the provider of the voice packet performs video recording directly. It is to be understood that since the provider of a voice packet knows more about the style feature of the voice packet, the provider can record videos more able to highlight the feature of the voice packet and thus can provide initial display videos more compatible with the voice packet.

In another optional implementation of embodiments of the present application, to improve the generation efficiency of initial display videos and reduce the labor and material costs in generation of initial display videos, it is feasible to determine promotion text of the each voice packet according to a promotion picture of the provider of the each voice packet; to generate a promotion audio and a promotion caption according to the promotion text based on an acoustic synthesis model of the provider of the each voice packet; and to generate the initial display videos according to the promotion picture, the promotion audio and the promotion caption.

Exemplarily, promotion text of a voice packet may be determined by the provider of the voice packet included in a promotion picture. For example, it is feasible to use a profile of the provider of the voice packet as the promotion text; and, based on an acoustic synthesis model of the provider of the voice packet, generate a promotion audio according to the promotion text and generate a promotion caption corresponding to the promotion audio. To make the promotion audio and the promotion caption more powerful in promoting the voice packet, it is feasible to, when the promotion audio and the promotion caption are generated according to the promotion text, generate the promotion caption based on a preconstructed promotion speech template and synthesize the promotion audio corresponding to the promotion caption based on the acoustic synthesis model of the provider of the voice packet so as to simulate the voice of the provider of the voice packet and obtain the promotion caption of the audio playback of the provider of the voice packet.

The promotion speech template may be constructed by a skilled technician according to needs or promotion experience. For example, in a voice packet corresponding to an electronic map, the following promotion speech template may be used: "[profile of a person], welcome to use my voice packet, and [name of the person] accompanies you on the trip safely".

It is to be understood that with the preceding method of generating a video in a template-based manner, video recording is not required so that the video generation efficiency is improved and labor and material costs in video generation are reduced.

In another optional implementation of embodiments of the present application, to improve the generation efficiency of initial display videos and reduce the labor and material costs in generation of initial display videos, it is feasible to construct video search words according to information about the provider of a voice packet; and search for videos of the provider of the voice packet according to the video search words and use the videos of the provider of the voice packet as the initial display videos.

Information about the provider of a voice packet includes feature description information of the provider of the voice packet, for example a voice feature like sweet, husky or intimate, and a voice broadcasting style like a humorous style or a funny style.

It is to be understood that with the preceding method of searching, by network-wide mining, for a video associated with information about the provider of a voice packet, video recording is not required so that the video generation efficiency is improved and labor and material costs in video generation are reduced.

In S302, candidate display videos associated with the each voice packet are determined by the video source priority level of each of the initial display videos, or by the similarity between the each of initial display videos and the each voice packet, or by the video source priority level of each of the initial display videos and the similarity between each of the initial display videos and the each voice packet.

In one embodiment, video source priority levels corresponding to different video sources are preset so that candidate display videos associated with a voice packet can be selected according to the video source priority levels from among initial display videos from different sources. A video source priority level represents the degree of association between a voice packet and a candidate display video. The higher the priority level, the greater the degree of association. It is to be understood that the adoption of a video source priority level ensures the degree of association between a voice packet and a candidate display video, laying a foundation for subsequent selection of a voice packet and providing a guarantee for the accuracy of the result of matching between a user and the recommendation result of target voice packets.

Exemplarily, video sources may include at least one of recording by the provider of a voice packet, templating, or network-wide mining. A video source priority level may be set by a skilled technician according to needs or experience. When there is a change in video sources of initial display videos, a skilled technician may perform the following operations according to needs or experience: editing the video sources among video source priority levels and adjusting the priority order of the video sources. The change in video sources may include addition or deletion of video sources. Accordingly, editing the video sources may be adding the video sources or deleting the video sources.

For example, when video sources include recording by the provider of a voice packet, templating, and network-wide mining, the set priority order of the video sources may be the provider of a voice packet, templating, and network-wide mining from high to low.

In one embodiment, it is feasible to determine the similarity between a voice packet and each of the initial display videos from the same or different sources and determine, according to the similarity, candidate display video associated with the voice packet. It is to be understood that the method of using similarity to help construct an association between voice packets and candidate display videos ensures the degree of association between the voice packets and the candidate display videos, laying a foundation for subsequent selection of a voice packet and providing a guarantee for the accuracy of the result of matching between a user and the recommendation result of target voice packets.

Exemplarily, it is feasible to calculate the cosine similarity between the voice of a voice packet and each initial display video by using a neural network, to sort cosine similarities of initial display videos, and to determine initial display videos reaching a set quantity threshold, satisfying a set number condition, or reaching the set quantity threshold and satisfying the set number condition to be candidate display videos associated with the voice packet. The set quantity threshold and the set number condition may be set by a skilled technician according to needs or experience.

In the training phase of a neural network, it is feasible to construct a training corpus by manual tagging to obtain a sample voice packet and positive and negative sample videos corresponding to the sample voice packet; accordingly, it is feasible to train the neural network through the training corpus so as to adjust and optimize network parameters in the neural network.

In an optional implementation of embodiments of the present application, voice packets and candidate display videos associated with the voice packets may be stored locally in an electronic device or in other storage devices associated with the electronic device. To improve the storage efficiency, it is feasible to store an association between voice packets and candidate display videos in a manner of key-value pairs. In one embodiment, the association may be stored using a forward index in which the identifier of a voice packet is key and association information of a candidate display video is value. Alternatively, in one embodiment, the association may be stored using an inverted index in which video tag information is key and the identifier of a voice packet is value.

To facilitate subsequent acquisition of attribute information of a target display video, it is feasible to, when the association is stored using a forward index, use attribute information of a candidate display video as association information of the candidate display video and store the attribute information of the candidate display video in the value field.

In one embodiment, to further ensure the association between a voice packet and candidate display videos while reducing the amount of data calculation for construction of the association between the voice packet and the candidate display videos, it is feasible to preliminarily select initial display videos according to the video source priority level of each of the initial display videos and select candidate display videos associated with the voice packet from among the preliminarily selected initial display videos according to the similarity between the voice packet and each of the preliminarily selected initial display videos.

In S303, at least one target display video is selected for a user from among candidate display videos associated with voice packets, and voice packets to which the at least one target display video belongs are used as candidate voice packets.

In S304, a target voice packet is selected for the user from among the candidate voice packets according to attribute information of the candidate voice packets and attribute information of the at least one target display video.

In S305, the target voice packet is recommended to the user.

In embodiments of the present application, in the process of recommending a voice packet, initial display videos of the voice packet are added. Candidate display videos associated with the voice packet are determined by the video source priority level of each of the initial display videos, or by the similarity between each of the initial display videos and the voice packet, or by the video source priority level of each of the initial display videos and the similarity between each of the initial display videos and the voice packet. With the preceding solution, the construction mechanism of an association between voice packets and candidate display videos is optimized, laying a foundation for subsequent selection of target display video and thus laying a foundation for gradual selection of candidate voice packets and target voice packets. Moreover, candidate display videos associated with a voice packet are selected from among initial videos according to video source priority levels, or the similarity between the videos and the voice packet, or the video source priority levels and the similarity between the videos and the voice packet, ensuring the degree of association between the voice packet and the candidate display videos and providing a guarantee for the accuracy of the result of matching between a user and the recommendation result of target voice packets.

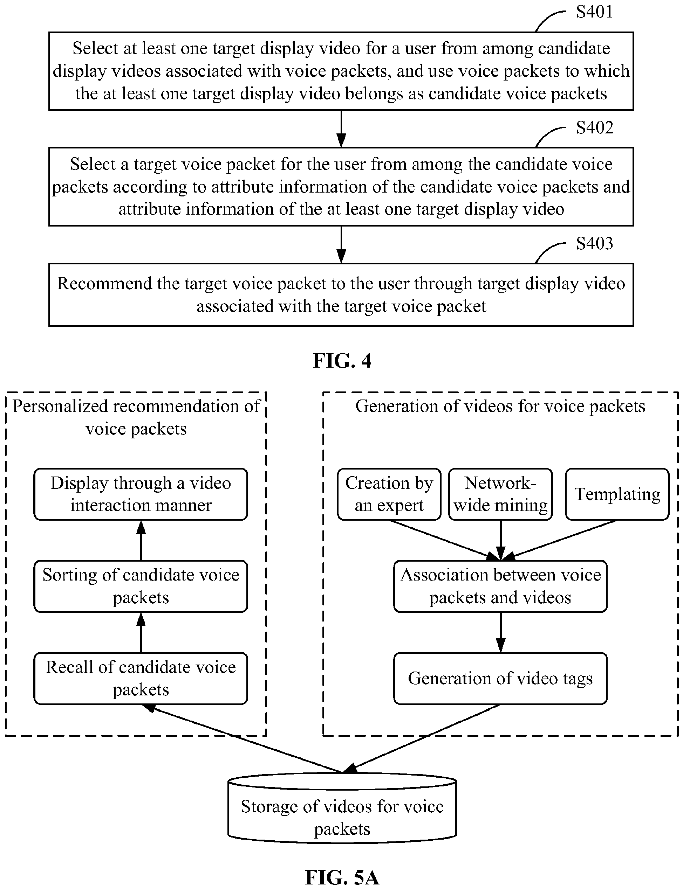

FIG. 4 is a flowchart of another voice packet recommendation method according to embodiments of the present application. The technical solution corresponding to the method is an improvement on each preceding technical solution.

In one embodiment, the step "the target voice packet is recommended to the user" includes that the target voice packet is recommended to a user through a target display video associated with the target voice packet so that the recommendation mechanism of target voice packets is optimized.

As shown in FIG. 4, the voice packet recommendation method includes the steps below.

In S401, at least one target display video is selected for a user from among candidate display videos associated with voice packets, and voice packets to which the at least one target display video belongs are used as candidate voice packets.

In S402, a target voice packet is selected for the user from among the candidate voice packets according to attribute information of the candidate voice packets and attribute information of the at least one target display video.

In S403, the target voice packet is recommended to the user through a target display video associated with the target voice packet.

It is to be understood that video display enables a user to acquire the features of a voice packet more intuitively and comprehensively, strengthens the impression of the user on target voice packets, and thus improves the selection efficiency of the user. Moreover, information is provided for the user through video display so that the user can acquire feature information of the voice packets more easily, thereby enhancing the browsing experience and the use experience of the user.

To facilitate downloading of a target voice packet by a user and shorten the step size of downloading, a download link of the target voice packet may be added in a target display video. The download link may be displayed through a website or a two-dimensional code carrying website information.

In one embodiment, when there are at least two target display videos, the at least two target display videos can be played in sequence by being switched in a slidable manner, making it more convenient for a user to operate.

In one embodiment, to further enhance video interactivity, it is feasible to enable exposure of functions of sharing, upvoting and commenting in a target display video, thereby shortening the step size of video interaction of a user or the step size of user-to-user interaction, improving user engagement, and improving the efficiency of video transmission between users.

FIG. 5A is a flowchart of another voice packet recommendation method according to embodiments of the present application. The technical solution corresponding to the method is a preferred implementation compared with each preceding technical solution.

As shown in FIG. 5A, the voice packet recommendation method includes three phases of generation of videos for voice packets, storage of videos for voice packets and personalized recommendation of voice packets.

### 1. Generation of videos for voice packets

### a. Generation of initial videos

The sources of videos for voice packets are classified into three types: creation by an expert, network-wide mining, and templating. The details are described below.

Creation by an expert: Initial videos are created from videos recorded by the provider of a voice packet. The provider of the voice packet knows more about the features (such as tone and style) of the voice packet, so the provider can record videos more able to highlight the features of the voice packet. For example, a video of a voice packet of a person named A is being created, where this video is characterized by a pretty young girl that has a sweet and intimate voice. The features of the video can be displayed vividly through sweet dress and intimate words (such as little brother, go to my heart, and closer) that are added to the video.

Network-wide mining: Videos are mined using constructed keywords. Still using a video of a voice packet of a person named A is being created as an example, search words such as "intimate videos of A" or "sweet videos of A" are constructed automatically and used in a search for a large number of initial videos in a search engine.

Templating: A video of a voice packet is created in a manner in which related pictures and speech (played by the voice of the voice packet) are merged. Still using a video of a voice packet of a person named A is being created as an example, the profile of A is transformed, based on a promotion speech template, into a promotion caption, for example, "[profile], welcome to use my voice packet, and [name] accompanies you on the trip safely"; a promotion audio corresponding to the promotion caption is synthesized according to the acoustic synthesis model of A; and an initial video is made according to the promotion caption, the promotion audio and personal photographs of A.

### b. Association between voice packets and videos

In the preceding manner, a large number of initial videos are constructed. It is needed to sort the initial videos according to the degree of relevance between initial videos and voice packets and select at least one initial video as a candidate video according to the sorting result. The details are described below.

### (a) Selection of videos from different sources

A priority rule may be predefined to define the priority of videos from different sources. For example, the priority order may be creation by an expert, templating, and network-wide mining from high to low. Then at least one initial video is selected as a candidate video according to the priority of the videos.

### (b) Selection of videos from the same source

The cosine similarity between the voice of a voice packet and each initial display video is calculated by using a first neural network. Cosine similarities of initial display videos are sorted.

Then at least one initial video is selected as a candidate video according to the sorting result.

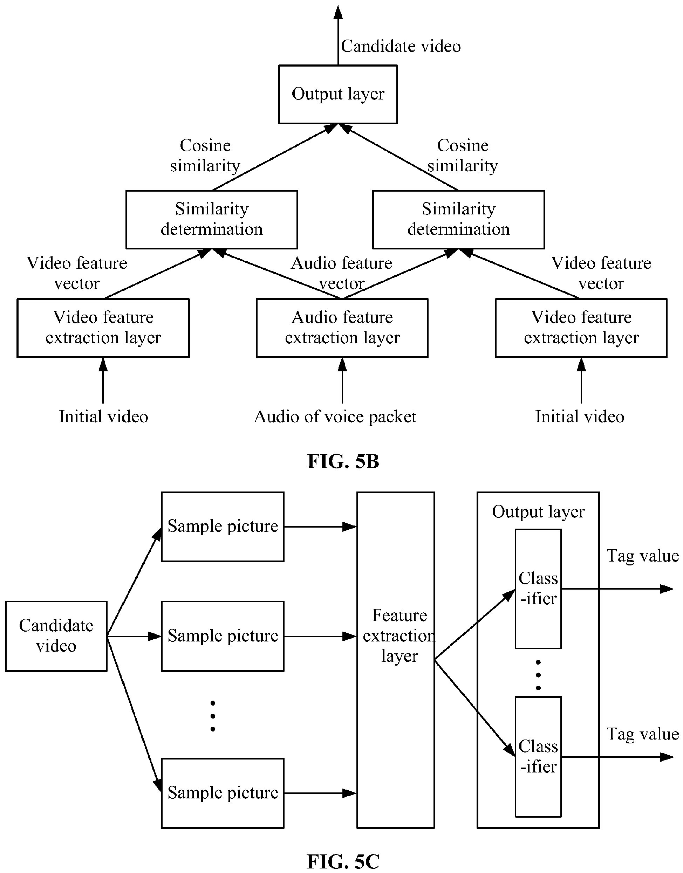

FIG. 5B is a diagram illustrating the structure of a first neural network model. FIG. 5B illustrates an example in which two initial videos are available for the selection of a candidate video.

The first neural network includes a feature extraction layer, a similarity determination layer and an output layer.

The feature extraction layer includes a video feature extraction layer configured for feature extraction of an initial video to obtain a video feature vector. The feature extraction layer further includes a voice packet feature extraction layer configured for audio feature extraction of a voice packet to obtain an audio feature vector. The feature extraction network is implemented based on a neural network.

The similarity determination layer is configured to calculate the cosine similarity between the audio feature vector and each video feature vector separately.

The output layer is configured to select at least one candidate video from among the initial videos according to each cosine similarity.

It is to be noted that in the training phase of the first neural network, it is feasible to construct a training corpus by manual tagging.

### c. Generation of video tags

The classification tag of each candidate video has different dimensions, for example, an image tag reflecting the image of a voice provider, a voice quality tag reflecting the voice feature of the voice provider, or a voice style tag reflecting a voice broadcasting style. Each dimension corresponds to at least one tag value. For example, the voice quality tag includes sweet or husky; the image tag includes a royal elder sister image, a loli image or an uncle image; the style tag includes a broadcasting tone or a humorous style.

Determination of tag values of different dimensions is equivalent to multiple-classification tasks. The number of tasks is the same as the number of dimensions. On this basis, candidate videos are classified by using a multi-task learning method through a second neural network so that the classification tag of each candidate video is determined.

FIG. 5C is a diagram illustrating the structure of a second neural network model. The input of the model is multiple sample pictures sampled from a candidate video. The output result of the model is the tag value with the largest probability in each dimension and the probability value corresponding to each tag value.

The model includes a feature extraction layer and an output layer.

The feature extraction layer is implemented based on a neural network and is configured for feature extraction of sample pictures of the candidate video. The output layer includes multiple classifiers configured to determine tag values of classification tags of different dimensions.

It is to be noted that classification tasks are related to each other when tag values of classification tags of different dimensions are determined for the same video, so common features can be extracted in a manner of sharing network parameters of the feature extraction layer.

In the model training phase of the second neural network model, it is feasible to manually provide a classification tag for each sample video or use a text description of a sample video or the user portrait of a viewing user of the sample video as a classification tag. In this manner, the cold-start problem is solved, the data amount of the training corpus is expanded, and thus the model accuracy of the training model is improved.

It is to be noted that the feature extraction layer used in the video tag generation phase and the feature extraction layer used in the phase of association between voice packets and videos are based on the same or different neural network structures.

### 2. Storage of information about videos for voice packets

Information about videos for voice packets is stored in a back-end storage system in a manner of key-value pairs in two indexed modes: a forward index and an inverted index. In the mode of forward index, the identifier of a voice packet is key, and the video content and video source of a candidate video, the cosine similarity between the audio of the voice packet and the candidate video, and the classification tag of a video for the voice packet are value. In the mode of inverted index, the classification tag of a video is key, and the identifier of a voice packet is value. With the preceding storage mode, online query requirements for personalized recommendation are well supported.

### 3. Personalized recommendation of voice packets

### a. Recall of candidate voice packets

A candidate voice packet is recalled primarily by searching an inverted index in which a portrait tag of a user is key.

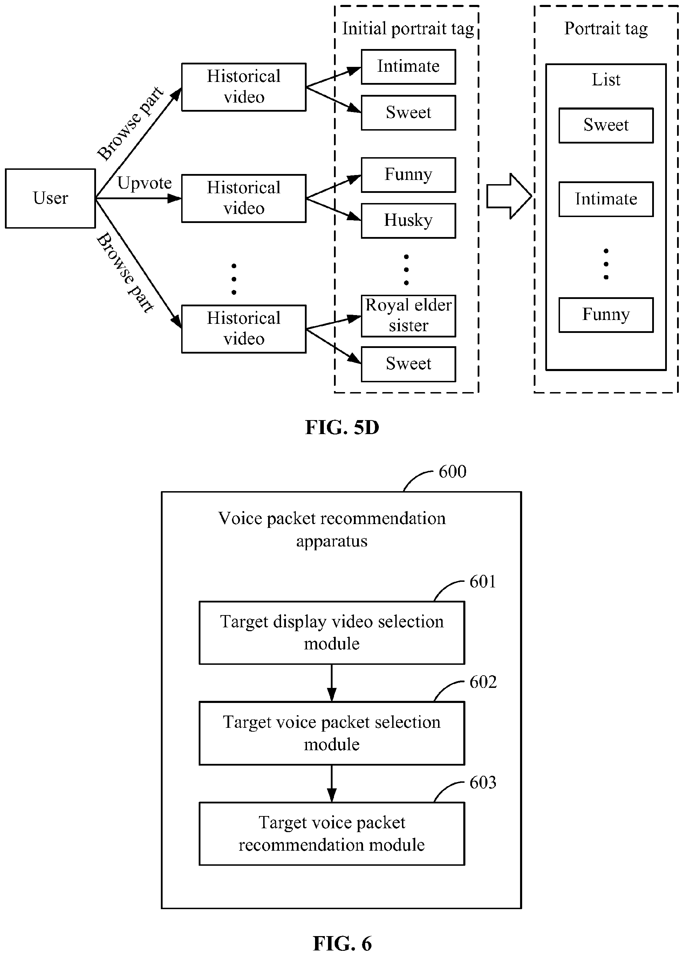

FIG. 5D is a diagram illustrating a process of determining a portrait tag of a user. In this process, initial portrait tag of the user are determined by use of a collaborative filtering method and based on classification tags of historical videos associated with historical behavior of the user; weighted sorting of the initial portrait tag is performed according to the frequency of occurrence of interaction and behavior of interaction so that the portrait tag of the user are obtained and listed; according to the degree of relevance between the portrait tag of the user and classification tags of candidate display videos associated with voice packets, a target video is recalled, and voice packets to which the recalled target video belongs are used as candidate voice packets.

The behavior of interaction includes at least one of browsing, commenting, upvoting, downloading or sharing. The behavior of interaction also includes the degree of interaction, for example, browsing part and browsing all.

### b. Sorting of candidate voice packets

With the preceding method of recalling voice packets, multiple candidate voice packets are recalled. The candidate voice packets are sorted through a sorting model. Target voice packets are selected from among the candidate voice packets. Moreover, a list of sorted target voice packets is displayed to each user.

The sorting model may be a tree model or a neural network model. The framework may be a pointwise, pairwise or listwise mature framework.

For example, with the sorting model, candidate voice packets are sorted according to click-through rates (CTRs) of voice packets, description information of the voice packets, source information of the candidate voice packets, the cosine similarity between audios of the voice packets and corresponding target videos, and classification tags of the target videos; and at least one candidate voice packet is selected as a target voice packet according to the sorting result.

In the training phase of the sorting model, a training corpus may be automatically constructed based on user interaction behavior of a sample user. In the listwise manner, for example, the same user may browse a large number of sample videos containing sample voice packets. These sample videos may be sorted from high to low according to the following sequence: a video converted from download behavior, an upvoted video, a commented video, an all browsed video, a partially browsed video and a barely browsed video".

### c. Display through a video interaction manner

The target voice packet is recommended to a user through the target video associated with the target voice packet. In this manner, the user can acquire the features of the voice packets more intuitively and comprehensively, and the impression of the voice packets on the user is deep, so that the selection efficiency of the user is greatly improved. Moreover, video browsing can improve the user experience of browsing and enables the user to acquire information more easily.

A target voice packet is displayed through a video interaction manner in the following three aspects: Functions of sharing, upvoting and commenting are exposed so that the interaction mode is more convenient; a two-dimensional code is dynamically generated for downloading of the voice packet and displayed in the upper right corner of a target video so that the step size of sharing and downloading by a user is shortened and the efficiency of video transmission between users is greatly improved; convenient interactive operations such as switching in a slidable manner are supported.

FIG. 6 is a diagram illustrating the structure of a voice packet recommendation apparatus according to embodiments of the present application. The voice packet recommendation apparatus 600 includes a target display video selection module 601, a target voice packet selection module 602 and a target voice packet recommendation module 603.

The target display video selection module 601 is configured to select at least one target display video for a user from among candidate display videos associated with voice packets and use voice packets to which the at least one target display video belongs as candidate voice packets.

The target voice packet selection module 602 is configured to select a target voice packet for the user from among the candidate voice packets according to attribute information of the candidate voice packets and attribute information of the at least one target display video.

The target voice packet recommendation module 603 is configured to recommend the target voice packet to the user.

In embodiments of the present application, the target display video selection module is configured to select at least one target display video for a user from among candidate display videos associated with voice packets and use voice packets to which the at least one target display video belongs as candidate voice packets; the target voice packet selection module is configured to select a target voice packet for the user from among the candidate voice packets according to attribute information of the candidate voice packets and attribute information of the at least one target display video; and the target voice packet recommendation module is configured to recommend the target voice packet to the user. With this solution, a voice packet is determined by using a video associated with the voice packet as an intermediate medium, and a target voice packet is recommended automatically, so that a transition is achieved from the case where a user searches for a voice packet to the case where a voice packet searches for a user. Moreover, a voice packet is determined by using a video, so a user does not need to try out voice packets frequently so that a user can acquire a voice packet more conveniently and efficiently.

In one embodiment, the target display video selection module 601 includes a target display video determination unit configured to determine the at least one target display video according to the degree of relevance between a portrait tag of the user and a plurality of classification tags of the candidate display videos associated with the voice packets.

In one embodiment, the apparatus further includes a picture extraction module configured to extract a plurality of pictures from each of the candidate display videos; and a classification tag determination module configured to input the extracted pictures into a pretrained multi-classification model and determine the at least one classification tag of the each of the candidate display videos according to the model output result.

In one embodiment, the apparatus further includes a sample classification tag determination module configured to use a text description of a sample video, or a user portrait of a viewing user of a sample video, or a text description of a sample video and a user portrait of a viewing user of the sample video as a sample classification tag of the sample video; and a multi-classification model training module configured to train a preconstructed neural network model according to a sample picture extracted from the sample video and the sample classification tag to obtain the multi-classification model.

In one embodiment, the multi-classification model shares model parameters in a process of determination of each of the classification tags.

In one embodiment, each classification tag includes at least one of an image tag, a voice quality tag or a voice style tag.

In one embodiment, the apparatus further includes an initial display video determination module configured to determine initial display videos of each voice packet; and a candidate display video determination module configured to determine, according to video source priority level of each of the initial display videos, candidate display videos associated with the each voice packet.

In one embodiment, the apparatus further includes an initial display video determination module configured to determine initial display videos of each voice packet; and a candidate display video determination module configured to determine, according to similarity between each of the initial display videos and the each voice packet, candidate display videos associated with the each voice packet.

In one embodiment, the initial display video determination module includes promotion text determination unit configured to determine promotion text of the each voice packet according to a promotion picture of the provider of the each voice packet; an audio and caption generation unit configured to generate a promotion audio and a promotion caption according to the promotion text based on an acoustic synthesis model of the provider of the each voice packet; and an initial display video generation unit configured to generate the initial display videos according to the promotion picture, the promotion audio and the promotion caption.

In one embodiment, the initial display video determination module includes a video search word construction unit configured to construct video search words according to information about the provider of the each voice packet; and an initial display video generation unit configured to search for videos of the provider of the each voice packet according to the video search words and use the videos of the provider of the each voice packet as the initial display videos.

In one embodiment, the target voice packet recommendation module 603 includes a target voice packet recommendation unit configured to recommend the target voice packet to the user through a target display video associated with the target voice packet.

The voice packet recommendation apparatus can perform the voice packet recommendation method provided in any one of embodiments of the present application and has function modules and beneficial effects corresponding to the performed method.

According to embodiments of the present application, the present application further provides an electronic device and a readable storage medium.

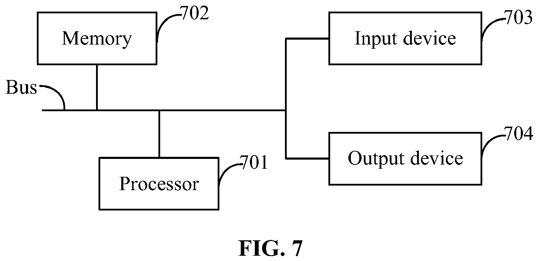

FIG. 7 is a block diagram of an electronic device for performing a voice packet recommendation method according to embodiments of the present application. The electronic device is intended to represent a form of digital computer, for example, a laptop computer, a desktop computer, a worktable, a personal digital assistant, a server, a blade server, a mainframe computer or another applicable computer. The electronic device may also represent a form of mobile device, for example, a personal digital assistant, a cellphone, a smartphone, a wearable device or another similar computing device. Herein the shown components, the connections and relationships between these components, and the functions of these components are illustrative only and are not intended to limit the implementation of the present application as described or claimed herein.

As shown in FIG. 7, the electronic device includes one or more processors 701, a memory 702, and interfaces for connecting components, including a high-speed interface and a low-speed interface. The components are interconnected to each other by different buses and may be mounted on a common mainboard or in other manners as desired. The processor may process instructions executed in the electronic device, including instructions stored in or on the memory to make graphic information of a GUI displayed on an external input/output device (for example, a display device coupled to an interface). In other embodiments, if required, multiple processors, multiple buses or a combination thereof may be used with multiple memories. Similarly, multiple electronic devices may be connected, each providing some necessary operations (for example, a server array, a set of blade servers or a multi-processor system). FIG. 7 shows one processor 701 by way of example.

The memory 702 is the non-transitory computer-readable storage medium provided in the present application. The memory stores instructions executable by at least one processor to cause the at least one processor to perform the voice packet recommendation method provided in the present application. The non-transitory computer-readable storage medium of the present application stores computer instructions for causing a computer to perform the voice packet recommendation method provided in the present application.

The memory 702 as a non-transitory computer-readable storage medium is configured to store non-transitory software programs and non-transitory computer-executable programs and modules, for example, program instructions/modules corresponding to the voice packet recommendation method provided in embodiments of the present application (for example, the target display video selection module 601, the target voice packet selection module 602 and the target voice packet recommendation module 603 shown in FIG. 6). The processor 701 is configured to execute non-transitory software programs, instructions and modules stored in the memory 702 to execute the function applications and data processing of a server, that is, perform the voice packet recommendation method provided in the preceding method embodiments.

The memory 702 may include a program storage region and a data storage region. The program storage region may store an operating system and an application required by at least one function. The data storage region may store data created based on the use of the electronic device for performing the voice packet recommendation method. Additionally, the memory 702 may include a high-speed random-access memory and a non-transient memory, for example, at least one disk memory, a flash memory or another non-transient solid-state memory. In some embodiments, the memory 702 optionally includes memories disposed remote from the processor 701, and these remote memories may be connected, through a network, to the electronic device for performing the voice packet recommendation method. Examples of the preceding network include, but are not limited to, the Internet, an intranet, a local area network, a mobile communication network and a combination thereof.

The electronic device for performing the voice packet recommendation method may further include an input device 703 and an output device 704. The processor 701, the memory 702, the input device 703 and the output device 704 may be connected by a bus or in other manners. FIG. 7 uses connection by a bus as an example.

The input device 703 can receive input number or character information and generate key signal input related to user settings and function control of the electronic device for performing the voice packet recommendation method. The input device 403 may be, for example, a touchscreen, a keypad, a mouse, a trackpad, a touchpad, a pointing stick, one or more mouse buttons, a trackball or a joystick. The output device 704 may be, for example, a display device, an auxiliary lighting device (for example, an LED) or a haptic feedback device (for example, a vibration motor). The display device may include, but is not limited to, a liquid-crystal display (LCD), a light-emitting diode (LED) display or a plasma display. In some embodiments, the display device may be a touchscreen.

The embodiments of the systems and techniques described herein may be implemented in digital electronic circuitry, integrated circuitry, an application-specific integrated circuit (ASIC), computer hardware, firmware, software or a combination thereof. The embodiments may include implementations in one or more computer programs. The one or more computer programs are executable, interpretable, or executable and interpretable on a programmable system including at least one programmable processor. The programmable processor may be a dedicated or general-purpose programmable processor for receiving data and instructions from a memory system, at least one input device and at least one output device and transmitting the data and instructions to the memory system, the at least one input device and the at least one output device.

These computing programs (also referred to as programs, software, software applications or codes) include machine instructions of a programmable processor. These computing programs may be implemented in a high-level procedural or object-oriented programming language or in an assembly/machine language. As used herein, the term "machine-readable medium" or "computer-readable medium" refers to any computer program product, device or apparatus (for example, a magnetic disk, an optical disk, a memory or a programmable logic device (PLD)) for providing machine instructions or data for a programmable processor, including a machine-readable medium for receiving machine instructions as machine-readable signals. The term "machine-readable signal" refers to any signal used in providing machine instructions or data for a programmable processor.

In order that interaction with a user is provided, the systems and techniques described herein may be implemented on a computer. The computer has a display device (for example, a cathode-ray tube (CRT) or liquid-crystal display (LCD) monitor) for displaying information to the user; and a keyboard and a pointing device (for example, a mouse or a trackball) through which the user can provide input to the computer. Other types of devices may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein) or a computing system including any combination of such back-end, middleware or front-end components. The components of the system may be interconnected by any form or medium of digital data communication (for example, a communication network). Examples of the communication network include a local area network (LAN), a wide area network (WAN) and the Internet.

The computing system may include clients and servers. A client and a server are generally remote from each other and typically interact through a communication network. The relationship between the client and the server arises by virtue of computer programs running on the respective computers and having a client-server relationship to each other.

In embodiments of the present application, the solution includes selecting at least one target display video for a user from among candidate display videos associated with voice packets and using voice packets to which the at least one target display video belongs as candidate voice packets; selecting a target voice packet for the user from among the candidate voice packets according to attribute information of the candidate voice packets and attribute information of the at least one target display video; and recommending the target voice packet to the user. With this solution, a voice packet is determined by using a video associated with the voice packet as an intermediate medium, and a target voice packet is recommended automatically, so that a transition is achieved from the case where a user searches for a voice packet to the case where a voice packet searches for a user. Moreover, a voice packet is determined by using a video, so a user does not need to try out voice packets frequently so that a user can acquire a voice packet more conveniently and efficiently.

It is to be understood that various forms of the preceding flows may be used, with steps reordered, added or removed. For example, the steps described in the present application may be executed in parallel, in sequence or in a different order as long as the desired result of the technical solution disclosed in the present application is achieved. The execution sequence of these steps is not limited herein.

## Claims

1. A voice packet recommendation method, executed by a voice packet recommendation apparatus, comprising:
determining (S301) initial display videos of each of a plurality of voice packets;
determining similarity between each of the initial display videos and each of the voice packets according to a first neural network comprising a feature extraction layer, a similarity determination layer and an output layer, wherein the determining similarity comprises performing, by a video feature extraction layer included in the feature extraction layer, feature extraction of the initial display videos to obtain video feature vectors, and performing, by a voice packet feature extraction layer included in the feature extraction layer, audio feature extraction of the voice packets to obtain audio feature vectors; and calculating, by the similarity determination layer, cosine similarity between each of the audio feature vectors and each of the video feature vectors separately; and
determining (S302), according to the similarity between each of the initial display videos and each of the voice packets, a plurality of candidate display videos associated with the voice packets, wherein the determining (S302) the candidate display videos comprises: selecting, by the output layer, the candidate display videos associated with the voice packets from the initial display videos according to the cosine similarity;
selecting (S101) at least one target display video for a user from the candidate display videos associated with the voice packets and using voice packets to which the at least one target display video belongs as candidate voice packets;
selecting (S102) a target voice packet for the user from the candidate voice packets according to attribute information of the candidate voice packets and attribute information of the at least one target display video; and
recommending (S103) the target voice packet to the user; wherein the selecting (S101) at least one target display video for a user from the candidate display videos associated with the voice packets comprises:
determining (S201) the at least one target display video according to a degree of relevance between a portrait tag of the user and a plurality of classification tags of the candidate display videos associated with the voice packets, wherein the portrait tag of the user represents an attribute of the user.

2. The method of claim 1,
wherein the portrait tag of the user is obtained by:
determining initial portrait tags of the user by use of a collaborative filtering method and based on classification tags of historical videos associated with historical behaviors of the user; performing weighted sorting of the initial portrait tags according to a frequency of occurrence of interaction and behavior of interaction.

3. The method of claim 2, further comprising:
extracting a plurality of pictures from each of the candidate display videos; and
inputting the extracted pictures into a pretrained multi-classification model and determining at least one classification tag of the each of the candidate display videos according to a model output result.

4. The method of claim 3, further comprising:
using a text description of a sample video, or a user portrait of a viewing user of a sample video, or a text description of a sample video and a user portrait of a viewing user of the sample video as a sample classification tag of the sample video; and
training a preconstructed neural network model according to a sample picture extracted from the sample video and the sample classification tag to obtain the multi-classification model.

5. The method of claim 3, wherein the multi-classification model shares model parameters in a process of determination of each of the classification tags.

6. The method of claim 2, wherein each of the classification tags comprises at least one of an image tag, a voice quality tag or a voice style tag.

7. The method of claim 1, wherein the determining (S301) initial display videos of each of the voice packets comprises:
determining promotion text of the each of the voice packets according to a promotion picture of a provider of the each of the voice packets;
generating a promotion audio and a promotion caption according to the promotion text based on an acoustic synthesis model of the provider of the each of the voice packets; and
generating the initial display videos according to the promotion picture, the promotion audio and the promotion caption.

8. The method of claim 1, wherein the determining (S301) initial display videos of each of the voice packets comprises:
constructing a video search word according to information about a provider of the each of the voice packets; and
searching for videos of the provider of the each of the voice packets according to the video search word and using the videos of the provider of the each of the voice packets as the initial display videos.

9. The method of any one of claims 1 to 6, wherein the recommending (S103) the target voice packet to the user comprises:
recommending the target voice packet to the user by displaying a target display video associated with the target voice packet.

10. An electronic device, comprising:
at least one processor (701); and
a memory (702) which is in communication connection to the at least one processor (701), wherein
the memory (702) stores instructions executable by the at least one processor (701), wherein the instructions are configured to, when executed by at least one processor (701), cause the at least one processor (701) to perform the voice packet recommendation method of any one of claims 1 to 9.

11. A non-transitory computer-readable storage medium storing computer instructions, wherein the computer instructions are configured to cause a computer to perform the voice packet recommendation method of any one of claims 1 to 9.

## Patentansprüche

1. Sprachpaketempfehlungsverfahren, das von einer Sprachpaketempfehlungseinrichtung ausgeführt wird und Folgendes umfasst:
Bestimmen (S301) von anfänglichen Anzeigevideos von jedem einer Vielzahl von Sprachpaketen;
Bestimmen einer Ähnlichkeit zwischen jedem der anfänglichen Anzeigevideos und jedem der Sprachpakete gemäß einem ersten neuronalen Netzwerk, das eine Merkmalsextraktionsschicht, eine Ähnlichkeitsbestimmungsschicht und eine Ausgabeschicht umfasst, wobei das Bestimmen einer Ähnlichkeit das Durchführen einer Merkmalsextraktion der anfänglichen Anzeigevideos durch eine Videomerkmalsextraktionsschicht, die in der Merkmalsextraktionsschicht beinhaltet ist, um Videomerkmalsvektoren zu erhalten, und das Durchführen einer Audiomerkmalsextraktion der Sprachpakete durch eine Sprachpaketmerkmalsextraktionsschicht, um Audiomerkmalsvektoren zu erhalten, und das separate Berechnen einer Kosinusähnlichkeit zwischen jedem der Audiomerkmalsvektoren und jedem der Videomerkmalsvektoren umfasst; und
Bestimmen (S302) einer Vielzahl von Anzeigevideokandidaten, die mit den Sprachpaketen verknüpft sind, gemäß der Ähnlichkeit zwischen jedem der anfänglichen Anzeigevideos und jedem der Sprachpakete, wobei das Bestimmen (S302) der Anzeigevideokandidaten Folgendes umfasst: Auswählen der Anzeigevideokandidaten, die mit den Sprachpaketen verknüpft sind, durch die Ausgabeschicht gemäß der Kosinusähnlichkeit aus den anfänglichen Anzeigevideos;
Auswählen (S101) von mindestens einem Zielanzeigevideo für einen Benutzer aus den mit den Sprachpaketen verknüpften Anzeigevideokandidaten und Verwenden von Sprachpaketen, zu denen das mindestens eine Zielanzeigevideo gehört, als Sprachpaketkandidaten;
Auswählen (S102) eines Zielsprachpakets für den Benutzer gemäß Attributinformationen der Sprachpaketkandidaten und Attributinformationen des mindestens einen Zielanzeigevideos aus den Sprachpaketkandidaten und
Empfahlen (S103) des Zielsprachpakets für den Benutzer;
wobei das Auswählen (S101) von mindestens einem Zielanzeigevideo für einen Benutzer aus den mit den Sprachpaketen verknüpften Anzeigevideokandidaten Folgendes umfasst:
Bestimmen (S201) des mindestens einen Zielanzeigevideos gemäß einem Grad der Relevanz zwischen einem Porträttag des Benutzers und einer Vielzahl von Klassifizierungstags der Anzeigevideokandidaten, die mit den Sprachpaketen verknüpft sind, wobei das Porträttag des Benutzers ein Attribut des Benutzers repräsentiert.

2. Verfahren nach Anspruch 1,
wobei das Porträttag des Benutzers durch Folgendes erhalten wird:
Bestimmen von anfänglichen Porträttags des Benutzers unter Verwendung eines kollaborativen Filterverfahrens und auf Basis von Klassifizierungstags von historischen Videos, die mit historischen Verhaltensweisen des Benutzers verknüpft sind;
Durchführen eines gewichteten Sortierens der anfänglichen Porträttags gemäß einer Häufigkeit des Auftretens einer Interaktion und einem Verhalten der Interaktion.

3. Verfahren nach Anspruch 2, das ferner Folgendes umfasst:
Extrahieren einer Vielzahl von Bildern aus jedem der Anzeigevideokandidaten und
Eingeben der extrahierten Bilder in ein vortrainiertes Mehrfachklassifizierungsmodell und Bestimmen von mindestens einem Klassifizierungstag von jedem der Anzeigevideokandidaten gemäß einem Modellausgabeergebnis.

4. Verfahren nach Anspruch 3, das ferner Folgendes umfasst:
Verwenden einer Textbeschreibung eines Mustervideos oder eines Benutzerporträts eines betrachtenden Benutzers eines Mustervideos oder einer Textbeschreibung eines Mustervideos und eines Benutzerporträts eines betrachtenden Benutzers des Mustervideos als ein Musterklassifizierungstag des Mustervideos und
Trainieren eines vorkonstruierten neuronalen Netzwerkmodells gemäß einem Musterbild, das aus dem Mustervideo extrahiert ist, und dem Musterklassifizierungstag, um das Mehrfachklassifizierungsmodell zu erhalten.

5. Verfahren nach Anspruch 3, wobei das Mehrfachklassifizierungsmodell in einem Prozess des Bestimmens von jedem der Klassifizierungstags Modellparameter gemeinsam verwendet.

6. Verfahren nach Anspruch 2, wobei jedes der Klassifizierungstags mindestens eines von einem Abbildungstag, einem Sprachqualitätstag oder einem Sprachstiltag umfasst.

7. Verfahren nach Anspruch 1, wobei das Bestimmen (S301) von anfänglichen Anzeigevideos von jedem der Sprachpakete Folgendes umfasst:
Bestimmen eines Promotionstextes von jedem der Sprachpakete gemäß einem Promotionsbild eines Bereitstellers von jedem der Sprachpakete;
Erzeugen eines Promotionsaudios und einer Promotionunterschrift gemäß dem Promotionstext auf Basis eines akustischen Synthesemodells des Bereitstellers von jedem der Sprachpakete und
Erzeugen der anfänglichen Anzeigevideos gemäß dem Promotionsbild, dem Promotionsaudio und der Promotionsunterschrift.

8. Verfahren nach Anspruch 1, wobei das Bestimmen (S301) von anfänglichen Anzeigevideos von jedem der Sprachpakete Folgendes umfasst:
Konstruieren eines Videosuchwortes gemäß Informationen über einen Bereitsteller von jedem der Sprachpakete und
Suchen nach Videos des Bereitstellers von jedem der Sprachpakete gemäß dem Videosuchwort und Verwenden der Videos des Bereitstellers von jedem der Sprachpakete als die anfänglichen Anzeigevideos.

9. Verfahren nach einem der Ansprüche 1 bis 6, wobei das Empfehlen (S103) des Zielsprachpakets für den Benutzer Folgendes umfasst:
Empfehlen des Zielsprachpakets für den Benutzer durch Anzeigen eines Zielanzeigevideos, das mit dem Zielsprachpaket verknüpft ist.

10. Elektronische Vorrichtung, die Folgendes umfasst:
mindestens einen Prozessor (701) und
einen Speicher (702) der mit dem mindestens einen Prozessor (701) in einer Kommunikationsverbindung steht, wobei
im Speicher (702) Anweisungen gespeichert sind, die von dem mindestens einen Prozessor (701) ausführbar sind, wobei die Anweisungen dazu ausgelegt sind, wenn sie von mindestens einem Prozessor (701) ausgeführt werden, den mindestens einen Prozessor (701) zu veranlassen, das Sprachpaketempfehlungsverfahren nach einem der Ansprüche 1 bis 9 durchzuführen.

11. Nichttransitorisches computerlesbares Speichermedium, auf dem Computeranweisungen gespeichert sind, wobei die Computeranweisungen dazu ausgelegt sind, den Computer zu veranlassen, das Sprachpaketempfehlungsverfahren nach einem der Ansprüche 1 bis 9 durchzuführen.

## Revendications

1. Procédé de recommandation de paquet vocal, exécuté par un appareil de recommandation de paquet vocal, comprenant :
de déterminer (S301) des vidéos d'affichage initiales de chacun d'une pluralité de paquets vocaux ;
de déterminer une similarité entre chacune des vidéos d'affichage initiales et chacun des paquets vocaux selon un premier réseau neuronal comprenant une couche d'extraction de caractéristique, une couche de détermination de similarité et une couche de sortie, dans lequel la détermination de similarité comprend de réaliser, par une couche d'extraction de caractéristique vidéo incluse dans la couche d'extraction de caractéristique, une extraction de caractéristique des vidéos d'affichage initiales afin d'obtenir des vecteurs de caractéristique vidéo, et de réaliser, par une couche d'extraction de caractéristique de paquet vocal incluse dans la couche d'extraction de caractéristique, une extraction de caractéristique audio des paquets vocaux afin d'obtenir des vecteurs de caractéristique audio ; et de calculer séparément, par la couche de détermination de similarité, une similarité cosinus entre chacun des vecteurs de caractéristique audio et chacun des vecteurs de caractéristique vidéo ; et
de déterminer (S302), selon la similarité entre chacune des vidéos d'affichage initiales et chacun des paquets vocaux, une pluralité de vidéos d'affichage candidates associées aux paquets vocaux, dans lequel la détermination (S302) des vidéos d'affichage candidates comprend : de sélectionner, par la couche de sortie, les vidéos d'affichage candidates associées aux paquets vocaux parmi les vidéos d'affichage initiales selon la similarité cosinus ;
de sélectionner (S101) au moins une vidéo d'affichage cible pour un utilisateur parmi les vidéos d'affichage candidates associées aux paquets vocaux et d'utiliser les paquets vocaux auxquels appartient l'au moins une vidéo d'affichage cible comme paquets vocaux candidats ;
de sélectionner (S102) un paquet vocal cible pour l'utilisateur parmi les paquets vocaux candidats selon des informations d'attribut des paquets vocaux candidats et des informations d'attribut de l'au moins une vidéo d'affichage cible ; et
de recommander (S103) le paquet vocal cible à l'utilisateur ; dans lequel
la sélection (S101) d'au moins une vidéo d'affichage cible pour un utilisateur parmi les vidéos d'affichage candidates associées aux paquets vocaux comprend :
de déterminer (S201) l'au moins une vidéo d'affichage cible selon un degré de pertinence entre une étiquette de portrait de l'utilisateur et une pluralité d'étiquettes de classification des vidéos d'affichage candidates associées aux paquets vocaux, dans lequel l'étiquette de portrait de l'utilisateur représente un attribut de l'utilisateur.

2. Procédé de la revendication 1,
dans lequel l'étiquette de portrait de l'utilisateur est obtenue :
en déterminant des étiquettes de portrait initiales de l'utilisateur en utilisant un procédé de filtrage collaboratif et en se basant sur des étiquettes de classification de vidéos historiques associées à des comportements historiques de l'utilisateur ;
en réalisant un tri pondéré des étiquettes de portrait initiales selon une fréquence d'occurrence d'une interaction et d'un comportement de l'interaction.

3. Procédé de la revendication 2, comprenant en outre :
d'extraire une pluralité de photos à partir de chacune des vidéos d'affichage candidates ; et
d'entrer les photos extraites dans un modèle de classification en classes multiples pré-entraîné, et de déterminer au moins une étiquette de classification de chacune des vidéos d'affichage candidates selon un résultat de sortie de modèle.

4. Procédé de la revendication 3, comprenant en outre :
d'utiliser comme étiquette de classification échantillon de la vidéo échantillon, une description textuelle d'une vidéo échantillon ou d'un portrait d'utilisateur d'un utilisateur qui regarde d'une vidéo échantillon, ou une description textuelle d'une vidéo échantillon et d'un portrait d'utilisateur d'un utilisateur qui regarde de la vidéo échantillon ; et
d'entraîner un modèle de réseau neuronal préconstruit selon une photo échantillon extraite à partir de la vidéo échantillon et l'étiquette de classification échantillon afin d'obtenir le modèle de classification en classes multiples.

5. Procédé de la revendication 3, dans lequel le modèle de classification en classes multiples partage des paramètres de modèle dans un processus de détermination de chacune des étiquettes de classification.

6. Procédé de la revendication 2, dans lequel chacune des étiquettes de classification comprend au moins une parmi une étiquette d'image, une étiquette de qualité vocale ou une étiquette de style vocal.

7. Procédé de la revendication 1, dans lequel la détermination (S301) de vidéos d'affichage initiales de chacun des paquets vocaux comprend :
de déterminer un texte promotionnel de chacun des paquets vocaux selon une photo promotionnelle d'un fournisseur de chacun des paquets vocaux ;
de générer un audio promotionnel et une légende promotionnelle selon le texte promotionnel sur la base d'un modèle de synthèse acoustique du fournisseur de chacun des paquets vocaux ; et
de générer les vidéos d'affichage initiales selon la photo promotionnelle, l'audio promotionnel et la légende promotionnelle.

8. Procédé de la revendication 1, dans lequel la détermination (S301) de vidéos d'affichage initiales de chacun des paquets vocaux comprend :
de construire un mot de recherche vidéo selon des informations sur un fournisseur de chacun des paquets vocaux ; et
de rechercher des vidéos du fournisseur de chacun des paquets vocaux selon le mot de recherche vidéo, et d'utiliser les vidéos du fournisseur de chacun des paquets vocaux comme vidéos d'affichage initiales.

9. Procédé de l'une quelconque des revendications 1 à 6, dans lequel la recommandation (S103) du paquet vocal cible à l'utilisateur comprend :
de recommander le paquet vocal cible à l'utilisateur en affichant une vidéo d'affichage cible associée au paquet vocal cible.

10. Dispositif électronique, comprenant :
au moins un processeur (701) ; et
une mémoire (702) connectée en communication avec l'au moins un processeur (701), dans lequel
la mémoire (702) stocke des instructions exécutables par l'au moins un processeur (701), dans lequel les instructions sont configurées pour, lorsqu'elles sont exécutées par au moins un processeur (701), permettre à l'au moins un processeur (701) de réaliser le procédé de recommandation de paquet vocal de l'une quelconque des revendications 1 à 9.

11. Support de stockage non-transitoire lisible par ordinateur stockant des instructions informatiques, dans lequel les instructions informatiques sont configurées pour permettre à un ordinateur de réaliser le procédé de recommandation de paquet vocal de l'une quelconque des revendications 1 à 9.
